# EUROPÄISCHE PATENTSCHRIFT

(11) **EP 3 072 769 B1**
(45) Veröffentlichungstag und Bekanntmachung des Hinweises auf die Patenterteilung: **22.12.2021**
(21) Anmeldenummer: 16000224.2
(22) Anmeldetag: 29.01.2016
(51) Int. Cl.: B60W 50/00, B60W 10/26, B60W 20/11, B60W 20/12, G05B 13/04

(54) **VERFAHREN ZUR SUCHRAUMEINSCHRÄNKUNG EINES MODELLBASIERTEN ONLINE-OPTIMIERUNGSVERFAHRENS ZUR PRÄDIKTION EINER ZUSTANDSGRÖSSE EINES FAHRZEUGS**
METHOD FOR RESTRICTING THE SEARCH AREA OF A MODEL-BASED ONLINE OPTIMIZATION METHOD FOR PREDICTING A STATE VARIABLE OF A VEHICLE
PROCEDE DESTINE A LIMITER L'ESPACE DE RECHERCHE D'UN PROCEDE D'OPTIMISATION EN LIGNE PAR MODELISATION DESTINE A PREDIRE UNE VARIABLE D'UN VEHICULE AUTOMOBILE

(30) Priorität: 21.03.2015 DE 102015003737
(43) Veröffentlichungstag der Anmeldung: 28.09.2016
(73) Patentinhaber: MAN Truck & Bus SE, 80995 München (DE)
(72) Erfinder: Ovari, Sebastian, 85241 Hebertshausen (DE); Kirchensteiner, Elmar, 85256 Vierkirchen (DE); Günnewicht, Manuel, 81243 München (DE); Hierlmeier, Matthias, 80997 München (DE); Nuber, Johannes, 85748 Garching (DE)
(74) Vertreter: v. Bezold & Partner Patentanwälte - PartG mbB

(56) Entgegenhaltungen:
- DE-A1-102004 040 351
- DE-A1-102013 009 945
- US-A1- 2004 068 359
- US-A1- 2013 073 113

## Beschreibung

Die Erfindung betrifft ein Verfahren zur Suchraumeinschränkung eines modellbasierten Online-Optimierungsverfahrens zur Prädiktion einer Zustandsgröße eines Fahrzeugs. Das Verfahren betrifft insbesondere ein Verfahren zur Einschränkung eines Suchraums für ein modellbasiertes Online-Optimierungsverfahren, das einen prädizierten optimalen Verlauf einer Zustandsgröße eines Fahrzeugs innerhalb eines vorgegebenen Suchraums für einen Prädiktionshorizont bestimmt.

In den letzten Jahren haben Assistenzsysteme in Fahrzeugen vermehrt Einzug gehalten, um insbesondere Sicherheit, Effizienz und Komfort zu erhöhen. Aus der Praxis ist bekannt, dass insbesondere bei Fahrzeugen, die einen hohen Grad der Automatisierung ermöglichen, z. B. Fahrzeuge mit automatisierter Getriebesteuerung, automatisierter Längsdynamikregelung bei aktivem Tempomat, automatisierter Momentenverteilung bei Hybridfahrzeugen, etc., für die Steuerverfahren vermehrt Online-Optimierungsverfahren bzw. Online-Optimierer unter Ausnutzung vorausschauender Informationen zum Einsatz kommen.

Primäres Ziel des Optimierers ist die Berechnung von Stellgrößen (Steuereingriffen), um bestimmte Zustandsgrößen bzw. Systemzustände des Fahrzeugs wie z. B. die Fahrzeuggeschwindigkeit oder den Ladezustand des Energiespeichers, stets in ein Optimum zu überführen. Das Optimum für einen prädizierten Zustandsverlauf ist durch Zielkriterien charakterisiert. Zielkriterien sind beispielsweise die Maximierung des Kraftstoffeinsparpotentials oder die Minimierung von Geräuschemissionen unter Vorgabe weiterer Randbedingungen, z. B. einer Mindestzeit für das Durchfahren einer Fahrstrecke.

Beispielsweise ist aus der Offenlegungsschrift DE 10 2004 040351 A1 ein Verfahren bekannt, welches die zu fahrende Strecke in Streckenabschnitte unterteilt und den Steigungsverlauf dieser Teilstrecken mit wenigen Parametern klassifiziert. Auf Basis dieser Klassifizierungswerte und der bekannten Motor- und Fahrleistungsdaten wird ein Geschwindigkeitssollwert für jeden der vorausliegenden Streckenabschnitte ermittelt, woraus dann eine Schaltstrategie zur Optimierung des Kraftstoffverbrauchs entwickelt werden kann.

Ziel der Optimierung ist, innerhalb eines Suchraums den einen optimalen Pfad, auch Trajektorie genannt, zu finden, der ein Optimum hinsichtlich der Zielkriterien darstellt. Der Suchraum wird auch als Zustandsraum bezeichnet. Der Suchraum (Zustandsraum) ist zunächst definiert durch die Anzahl der Abtastschritte der Zustandsgröße multipliziert mit der Anzahl der Horizont-Abtastschritte. Dies ist der theoretisch mögliche Suchraum. Durch Vorgabe eines Startwerts und eines Zielwerts für den Verlauf der Zustandsgröße kann der mögliche Suchraum bereits eingeschränkt werden. Die Optimierung ermittelt den optimalen Verlauf der Zustandsgröße anhand der im Suchraum möglichen Zustandsverläufe, d. h. den Verläufen der zu optimierenden Zustandsgröße bzw. Systemgröße von einem Start- zu einem Zielzustand innerhalb der Suchraumgrenzen im aktuellen Prädiktionshorizont. Der Prädiktionshorizont wird auch als Vorhersagehorizont bezeichnet.

Ein Beispiel für derartige Optimierungsverfahren ist die modellbasierte prädiktive Regelung, die an sich aus dem Stand der Technik bekannt ist und seit den 70er-Jahren erfolgreich zur Regelung verschiedenster technischer Prozesse eingesetzt wird. Zum Stand der Technik betreffend die modellbasierte prädiktive Regelung wird beispielhaft auf folgende beide Veröffentlichungen verwiesen: J. M. Maciejowski. Predictive Control with Constraints. Prentice Hall, New Jersey, 2002 und James B. Rawlings. Tutorial Overview of Model Predictive Control. IEEE Control Systems Magazine, 2000.

Ferner ist aus der Praxis und dem Stand der Technik bekannt, dass die modellbasierte prädiktive Regelung in jüngerer Zeit auch vermehrt zur Online-Optimierung von Zustandsgrößen bzw. Systemgrößen von Kraftfahrzeugen, insbesondere von Hybridfahrzeugen, eingesetzt wird. Beispielsweise wird hierbei der Antriebsstrang durch detaillierte Systemmodelle abgebildet, in die Wirkungsgradbetrachtungen, thermische Modelle und Lebensdauerbetrachtungen der Systemkomponenten etc. einfließen. Ausgehend vom einem aktuellen Zeitpunkt und einem aktuellen Wert der Zustandsgröße(n) wird unter Verwendung des Systemmodells das zukünftige dynamische Verhalten des Systemzustands über einen endlichen Prädiktionshorizont prädiziert. Die möglichen Trajektorien der zu optimierenden Zustandsgröße bzw. Systemgröße werden mit einem Zielfunktional bewertet und diejenige als Optimaltrajektorie ausgewählt, die ein vorgegebenes Gütemaß gemäß der Zielkriterien minimiert. Beispielhaft wird hierzu auf die Veröffentlichungen [1]: BACK, M. : Prädiktive Antriebsregelung zum energieoptimalen Betrieb von Hybridfahrzeugen, Universitätsverlag Karlsruhe, Diss., 2005 und [2]: BECK, R. ; BOLLIG, A. ; ABEL, D. : Echtzeitstrategien zum Prädiktiven Optimalen Energiemanagement in Hybridfahrzeugen. VDI-Berichte Nr. 1975 (2006), S. 557-560 verwiesen.

Auch die Offenlegungsschrift US 2004/0068359 A1 offenbart beispielhaft, wie die modellbasierte prädiktive Regelung in einem Kraftfahrzeug eingesetzt werden kann, um auf Basis gespeicherter Informationen über den zu fahrenden Geländeverlauf einen optimalen Verlauf einer Zustandsgröße für den vorausliegenden Streckenabschnitt zu bestimmen.

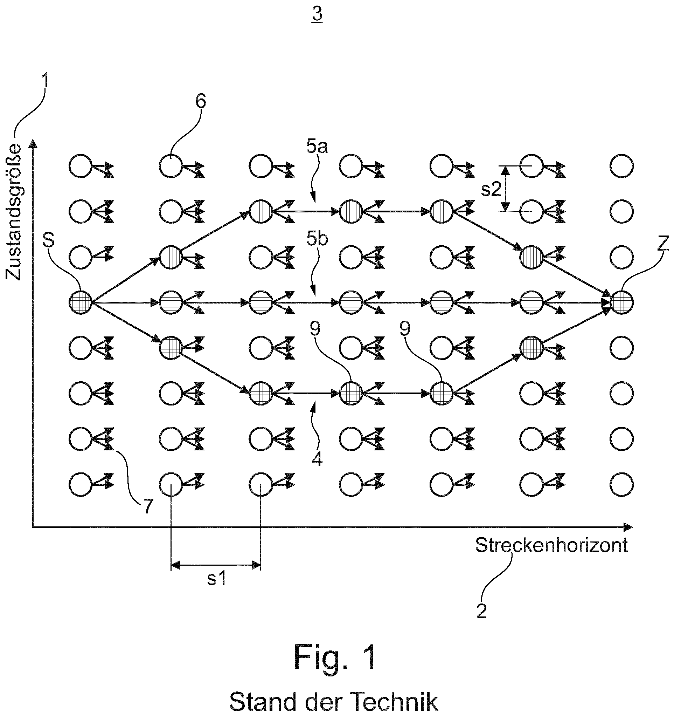

In Figur 1 sind beispielhaft mögliche Zustandsverläufe 4, 5a, und 5b gezeigt, die im Rahmen eines modellbasierten prädiktiven Regelverfahrens von einem Startzustand S zu einem Zielzustand Z innerhalb eines endlichen Suchraumes 3 für eine Zustandsgröße 1 (z. B. Fahrzeuggeschwindigkeit) berechnet wurden. Ein erster Verlauf ist durch die die schwarzen Punkte 9 verbindende Linie 4 dargestellt. Weitere mögliche Verläufe sind beispielhaft durch die Linien 5a bzw. 5b dargestellt, die die vertikal bzw. horizontal gestreiften Zustandspunkte (Geschwindigkeitspunkte) verbinden.

Der Suchraum 3 ist diskretisiert, d. h., es wird ein diskreter Wertebereich in Form der Zustandspunkte 6 für alle möglichen Geschwindigkeitsverläufe vorgegeben. Die Schrittweite bzw. Abtastrate für die unterschiedlichen Werte der Zustandsgröße ist mit s2 angegeben. Der Suchraum ist in Richtung der Horizontachse 2 ebenfalls diskretisiert, die Schrittweite ist mit s1 angegeben.

Gesucht ist der in Abhängigkeit von vorgegebenen Zielkriterien und Randbedingungen optimale Geschwindigkeitsverlauf innerhalb des aktuellen Prädiktionshorizontes 2, ausgehend von dem aktuellen Startzustand S und einem Zielzustand Z. Der aktuelle Startzustand S ist durch den aktuellen Wert der Zustandsgröße, z. B. der aktuellen Fahrgeschwindigkeit, vorgegeben. Der Zielzustand Z wird ebenfalls vorgeben, z. B. durch Schätzung.

Im Rahmen der Optimierung wird unter Verwendung eines Systemmodells das zukünftige dynamische Verhalten des Systemzustands über dem aktuellen Prädiktionshorizont prädiziert, d. h. vorhergesagt. Hierbei wird jeder Zustandsübergang, angedeutet durch die Pfeile in Figur 1, hinsichtlich der Zielkriterien (z. B. der Kraftstoffbedarf für eine Geschwindigkeitsänderung) mittels eines Zielfunktionals bewertet. Aus den möglichen Trajektorien der Zustandsgröße wird die optimale Trajektorie bestimmt. Im Beispiel der Figur 1 soll die Linie 4 die optimale Trajektorie darstellen, d. h. z. B. den Geschwindigkeitsverlauf mit dem geringsten Kraftstoffbedarf in dem vorausliegenden Streckenhorizont 2 angeben.

Derartige Optimierungsverfahren arbeiten mit gleitenden Prädiktionshorizonten, d. h., nach Verstreichen eines Zeitintervalls wird basierend auf dem aktuell gemessenen oder geschätzten neuen Zustand eine neue Prädiktion gestartet, die jedoch um einen Zeitschritt verschoben ist. Der neue Prädiktionshorizont beginnt somit einen Zeitschritt später und reicht demzufolge auch einen Zeitschritt weiter in die Zukunft, es wird daher auch von einem gleitenden Horizont gesprochen. Durch das fortlaufende Miteinbeziehen des aktuellen Systemzustands und durch die fortlaufend neu berechnete optimale Ansteuerung wird so anstelle einer offenen Steuerung ein geschlossener Regelkreis erhalten.

Ein Vorteil derartiger Online-Optimierungsverfahren ist die Berechnung eines global optimalen Zustandsverlaufs innerhalb des definierten Suchraums. Ein Suchraum kann durch eine oder mehrere Zustandsgrößen definiert sein. Je größer jedoch der Prädiktionshorizont (Vorausschau-Horizont) gewählt wird, desto größer ist das Optimierungspotential.

Ein Nachteil derartiger Online-Optimierungsverfahren ist bekanntermaßen der hohe Rechenaufwand aufgrund der Berechnung aller (möglichen) Zustandsübergänge. Aufgrund begrenzter Rechenressourcen und Rechenzeit bei der Online-Optimierung wäre es daher wünschenswert, den Suchraum einzuschränken.

Ein aus der Praxis bekannter Ansatz ist die Verkürzung des Prädiktionshorizontes. Dies reduziert jedoch die Güte des Optimierungsergebnisses.

In der Veröffentlichung [1] wird stattdessen vorgeschlagen, den Gesamtzustandsraum (Suchraum) einzuschränken, wobei ausgehend vom aktuellen Startzustand ein erreichbarer Zustandsraum berechnet wird und wobei unter der Annahme, dass der Zielzustand erreicht werden muss, ein zielführender Zustandsraum berechnet wird. Die Berechnung erfolgt mittels unterer und oberer Randtrajektorien, die diejenigen Zustände kennzeichnen, die auf Basis der Systemeigenschaften eine maximal mögliche Entfernung vom Start- bzw. Zielzustand darstellen. Anschließend wird ein reduzierter Zustandsraum aus der Schnittmenge von erreichbarem und zielführendem Zustandsraum bestimmt, der als eingeschränkter Suchraum dem Optimierungsverfahren zu Grunde gelegt wird.

Nachteilig an diesem Ansatz ist, dass die damit erzielbaren Einschränkungen des Suchraums eher klein sind, insbesondere bei längeren Prädiktionshorizonten, da die vorgeschlagenen Randtrajektorien in der Regel noch einen großen Teil des Gesamtsuchraums abdecken. Ein weiterer Nachteil ist der vergleichsweise hohe Rechenaufwand, der zur Bestimmung des reduzierten Zustandsraums erforderlich ist, wodurch Einsparungen im Rechenaufwand beim eigentlichen nachgelagerten Optimierungsverfahren teilweise wieder aufgehoben werden.

Es ist somit eine Aufgabe der Erfindung, ein verbessertes Verfahren zur Suchraumeinschränkung eines modellbasierten Online-Optimierungsverfahrens zur Prädiktion einer Zustandsgröße eines Fahrzeugs bereitzustellen, mit dem Nachteile herkömmlicher Techniken vermieden werden können. Es ist insbesondere eine Aufgabe der Erfindung, ein Verfahren zur Suchraumeinschränkung bereitzustellen, mit dem eine möglichst große Suchraumeinschränkung ermöglicht wird und mit dem eine Beeinträchtigung der Güte des Optimierungsergebnisses eines nachfolgenden Optimierungsverfahrens vermieden oder zumindest klein gehalten werden kann.

Diese Aufgaben werden durch ein Verfahren mit den Merkmalen des Hauptanspruchs gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Die Erfindung beruht auf der technischen Erkenntnis, dass rein auf Basis von geeigneten Streckeninformationen der vorausliegenden Fahrtstrecke im Prädiktionshorizont und ohne Verwendung des Optimierers bereits eine Abschätzung des Verlaufs der zu optimierenden Zustandsgröße im Prädiktionshorizont durchgeführt werden kann, die hinreichend genau ist, um sie zur Suchraumeinschränkung zu verwenden.

Erfindungsgemäß wird somit ein Verfahren zur Einschränkung eines Suchraums für ein modellbasiertes Online-Optimierungsverfahren vorgeschlagen. Das modellbasierte Online-Optimierungsverfahren, dessen Suchraum eingeschränkt wird, ist insbesondere ein Verfahren, das einen prädizierten optimalen Verlauf einer Zustandsgröße (Systemgröße) eines Fahrzeugs innerhalb eines vorgegebenen Suchraums für einen vorausliegenden Streckenabschnitt bestimmt. Dieser durch das Optimierungsverfahren bestimmte Verlauf wird nachfolgend als erster Verlauf bezeichnet, um diesen von einem erfindungsgemäßen zweiten Verlauf zu unterscheiden, der auf Basis von Streckeninformationen und nicht mittels des Optimierungsverfahrens ermittelt wird. Das Online-Optimierungsverfahren ist vorzugsweise ein modellbasiertes prädiktives Regelverfahren.

Gemäß allgemeinen Gesichtspunkten der Erfindung umfasst das Verfahren zur Einschränkung des Suchraums für das Optimierungsverfahren die folgenden Schritte: Bestimmen eines prädizierten zweiten Verlaufs der Zustandsgröße entlang des vorausliegenden Streckenabschnitts in Abhängigkeit von Streckeninformationen des vorausliegenden Streckenabschnitts und Einschränken des Suchraums in Abhängigkeit von dem bestimmten prädizierten zweiten Verlauf der Zustandsgröße. Der so eingeschränkte Suchraum kann dann für die nachfolgende Bestimmung des ersten Verlaufs der Zustandsgröße im Rahmen des modellbasierten Online-Optimierungsverfahrens verwendet werden.

Erfindungsgemäß wird somit der Verlauf von mindestens einer Zustandsgröße des Fahrzeugs, deren Veränderung sich auf eine oder mehrere Streckeninformationen zumindest teilweise zurückführen lässt, anhand der entsprechenden Streckeninformationen abgeschätzt, um einen zumindest ungefähren Verlauf der Zustandsgröße zu bestimmen. Anhand dieses abgeschätzten Verlaufs kann der Suchraum für die nachfolgende, eigentliche genaue Bestimmung der Zustandsgröße eingeschränkt werden. Somit kann die Rechenzeit eines nachfolgenden Optimierungsverfahrens eingeschränkt werden oder bei gleicher Rechenzeit ein größerer Streckenhorizont bzw. ein größerer Prädiktionshorizont zur Optimierung herangezogen werden, was die Güte des Optimierungsverfahrens verbessert.

Der abgeschätzte prädizierte zweite Verlauf der Zustandsgröße wird somit nicht unter Verwendung des modellbasierten Optimierungsverfahrens bzw. des Optimierers berechnet, sondern vorzugsweise nur auf Basis von Streckeneigenschaften bzw. Streckenparametern des vorausliegenden Fahrtstreckenabschnitts und deren Auswirkungen auf den Wert der Zustandsgröße. Die Auswirkung einer bestimmten Streckeneigenschaft auf den Wert der Zustandsgröße kann beispielsweise durch eine entsprechende Vorgabe oder Berechnungsvorschrift ermittelt werden, die angibt, ob und wie ein bestimmter Wert des einen oder der mehreren Streckenparameter den Wert der mindestens einen Zustandsgröße verändert.

Gemäß einer besonders bevorzugten Ausführungsform des Verfahrens umfasst die Bestimmung des prädizierten zweiten Verlaufs der Zustandsgröße die folgenden Schritte:
Eine Ermittlung von Streckendaten für den vorausliegenden Streckenabschnitt, der dem aktuellen Prädiktionshorizont entspricht. Ferner eine anschließende Einteilung des vorausliegenden Streckenabschnitts in vorbestimmte Klassen in Abhängigkeit von den ermittelten Streckendaten, so dass sich eine Abfolge von Klassen entlang des Streckenabschnittes ergibt. Jeder Klasse wird entweder ein Wert der Zustandsgröße oder eine Änderung des Werts der Zustandsgröße bzw. ein Grad der Zustandsänderung der Zustandsgröße zugeordnet, insbesondere eine Relativänderung und/oder ein Absolutwert der Zustandsgröße. Schließlich umfasst die Ausführungsform den Schritt der Bestimmung des prädizierten zweiten Verlaufs der Zustandsgröße anhand der Werte und/oder Änderungen der Werte der Zustandsgröße für die Abfolge von Klassen entlang des Streckenabschnittes. Ein besonderer Vorzug dieses Klassifizierungsansatzes ist, dass hiermit der prädiktive zweite Verlauf schnell und mit vergleichsweise wenig Rechenaufwand abgeschätzt werden kann.

Die Streckeninformation, beispielweise in Form von streckenspezifischen Parametern und/oder Streckendaten, gibt eine oder mehrere Eigenschaften des Streckenabschnitts, der dem jeweiligen Prädiktionshorizont entspricht, an, beispielsweise deren Steigungsverlauf bzw. Höhenprofil, den Verlauf der zulässigen Höchstgeschwindigkeit entlang des Streckenabschnitts, Kurvenradien der Kurven und/oder vorhandene Kreuzungen entlang des Streckenabschnitts.

Vorstehend wurde bereits erwähnt, dass sich das Verfahren zur Einschränkung des Suchraums von Fahrzeugzustandsgrößen eignet, deren Änderung sich auf eine Streckeninformation bzw. Streckeneigenschaft hinreichend genau zurückführen lässt.

Die Zustandsgröße des Fahrzeugs kann beispielsweise ein Ladezustand eines Energiespeichers zur Bereitstellung elektrischer Antriebsenergie in einem Hybrid- oder Elektroantriebsstrang sein, nachfolgend auch als Traktionsenergiespeicher bezeichnet. Eine andere mögliche Zustandsgröße ist die Kühlmitteltemperatur eines Primärkühlkreislaufs, z.B. eines Verbrennungsmotors, oder die Kühlmitteltemperatur eines Sekundärkühlkreislaufs, z. B. für Hybrid-Komponenten. Eine weitere mögliche Zustandsgröße ist die Gangwahl für ein automatisiertes Getriebe oder die Geschwindigkeitswahl für einen Tempomaten.

Dem Fachmann ist klar, dass die Erfindung nicht auf die vorstehenden Beispiele von Zustandsgrößen beschränkt ist, sondern die Erfindung prinzipiell zur Einschränkung eines Suchraumes für alle Zustandsgrößen bzw. Systemgrößen verwendet werden kann, die mit einem modellbasierten Optimierungsverfahren in einem Prädiktionshorizont vorhergesagt werden sollen und deren Änderung entlang eines Streckenabschnitts im Prädiktionshorizont sich auf eine Streckeninformation bzw. Streckeneigenschaft hinreichend genau zurückführen lassen.

Die Zustandsgröße kann insbesondere auch als mehrdimensionale Zustandsgröße ausgeführt sein und beispielsweise sowohl den Verlauf des Ladezustands des Traktionsenergiespeichers als auch den Geschwindigkeitsverlauf, den Verlauf der Gangwahl und/oder den Verlauf der Kühlmitteltemperatur angeben.

Unter dem Begriff Suchraum werden alle Zustandsverläufe mindestens einer Zustandsgröße innerhalb des zu optimierenden Prädiktionshorizontes verstanden, die zumindest ausgehend von einem Startzustand der mindestens einen Zustandsgröße und in Abhängigkeit von einem vorzugebenen Zielzustand der mindestens einen Zustandsgröße möglich sind.

Gemäß einer weiteren Ausführungsform der Erfindung kann die jeder Klasse zugeordnete Änderung des Werts der Zustandsgröße oder der jeder Klasse zugeordnete Wert der Zustandsgröße offline mittels einer Simulation oder eines heuristischen Verfahrens ermittelt werden. Mit anderen Worten können die klassenspezifischen Funktionsparameter, die angeben, wie sich die klassenspezifischen Streckeneigenschaften auf die Zustandsgröße auswirken, simulativ, z. B. mittels eines Simulationsmodells, das die Abhängigkeit des Systemverhaltens in Abhängigkeit der verwendeten Streckenparamater näherungsweise nachbildet, bestimmt werden. Alternativ können diese klassenspezifischen Funktionsparameter heuristisch vorgeben werden, z. B. basierend auf experimentellen Daten.

Eine besonders bevorzugte Möglichkeit der erfindungsgemäßen Realisierung sieht vor, dass die Einteilung des vorausliegenden Streckenhorizontes in vorbestimmte Klassen zumindest in Abhängigkeit von einem Steigungsverlauf und/oder einem Höhenprofil der Fahrtstrecke erfolgt. Beispielsweise korreliert der Steigungsverlauf entlang der Fahrtstrecke in der Regel stark mit dem Verlauf des Ladezustands eines Traktionsenergiespeichers, was nachfolgend noch im Rahmen eines Ausführungsbeispiels detaillierter erläutert wird. Der Steigungsverlauf korreliert ebenfalls mit dem Wärmeeintrag in den oder die Kühlkreisläufe und somit mit der Kühlmitteltemperatur. Der Steigungsverlauf korreliert ebenfalls stark mit der jeweiligen Kombination aus eingelegtem Gang eines automatisierten Getriebes und der Geschwindigkeitswahl.

Es ist weiter vorteilhaft, zur Klassifizierung neben den Steigungsdaten ferner weitere Streckeneigenschaften zu verwenden, insbesondere die Berücksichtigung des Verlaufs der zulässigen Höchstgeschwindigkeit entlang des Streckenabschnitts. Beispielsweise kann eine erste Klassifizierung anhand von Steigungsdaten erfolgen, und jede Steigungsklasse kann eine Unterklassifizierung basierend auf einer anderen Streckeneigenschaft, beispielsweise der zulässigen Höchstgeschwindigkeit, aufweisen. Dadurch kann die Genauigkeit der Abschätzung des zweiten Verlaufs erhöht werden.

Gemäß einer weiteren Ausführungsvariante der Erfindung wird ein prädizierter Zielzustand des zweiten Verlaufs, d. h. der Wert der Zustandsgröße am Ende des zu Grunde liegenden Prädiktionshorizontes, als Zielzustand für das nachfolgende Optimierungsverfahren vorgegeben. Da als Vorgabe für das nachfolgende Optimierungsverfahren jeweils ein Startzustand der Zustandsgröße zu Beginn des Prädiktionshorizontes als auch ein Zielzustand am Ende des Prädiktionshorizontes vorgegeben werden muss, liegt ein besonderer Vorzug dieser Ausführungsvariante somit darin, dass die erfindungsgemäße Abschätzung des Verlaufs der Zustandsgröße automatisch eine gute Schätzung für den Zielzustand bereitstellt.

Eine weitere Ausführungsform ist dadurch gekennzeichnet, dass durch Verschieben des prädizierten zweiten Verlaufs der Zustandsgröße um einen positiven ersten Offset eine erste Suchraumgrenze festgelegt wird. Ferner kann durch Verschieben des prädizierten zweiten Verlaufs der Zustandsgröße um einen negativen zweiten Offset eine zweite Suchraumgrenze festgelegt werden. Gemäß dieser Ausführungsform umfasst der eingeschränkte Suchraum für die Zustandsgröße alle Werte der Zustandsgröße innerhalb der ersten und zweiten Suchraumgrenzen für den aktuellen Prädiktionshorizont. Gemäß dieser Variante wird der Suchraum somit in Form eines Suchbandes eingeschränkt, innerhalb dessen der bestimmte prädizierte zweite Verlauf der Zustandsgröße verläuft. Wenn der erste und zweite Offset gleich groß gewählt werden, verläuft der zweite Verlauf der Zustandsgröße mittig im Suchband. Die Offsets sind ausreichend groß so zu wählen, so dass die Trajektorie des optimalen Zustandsverlaufs mit einer hohen Wahrscheinlichkeit vollständig innerhalb des Suchbandes verlaufen wird. Beispielsweise kann eine zweckmäßige Größe der Offsets vorab anhand von Testsimulationen ermittelt werden. Die Offsets über den Prädiktionshorizont können konstant oder variabel sein.

Bei einer vorteilhaften Variante dieser Ausgestaltungsform sind die Offsets und damit der Abstand der Suchraumgrenzen vom dem zweiten Verlauf der Zustandsgröße variabel. Vorteilhaft ist hierbei, den Abstand der Suchraumgrenzen vom prädizierten zweiten Verlauf der Zustandsgröße in Abhängigkeit von einer Größe zu verändern, die ein Maß für die Stärke einer Änderung des prädizierten zweiten Verlaufs der Zustandsgröße angibt.

Diese Größe kann beispielsweise die erste und/oder zweite Ableitung der Funktion, die den zweiten Verlauf der Zustandsgröße im Prädiktionshorizont beschreibt, sein. Hierbei können die Suchraumgrenzen beispielsweise derart festgelegt werden, dass sie jeweils Abschnitte mit mindestens zwei unterschiedlichen Abständen zum prädizierten zweiten Verlauf der Zustandsgröße aufweisen, wobei der größere Abstand für diejenigen Abschnitte des vorausliegenden Streckenhorizonts gewählt wird, in denen sich der prädizierte zweite Verlaufs der Zustandsgröße stärker ändert als in den Abschnitten mit kleinerem Abstand.

Diese Variante bietet den Vorteil, dass die Einschränkung des Suchraums dynamisch an die abgeschätzte Stärke bzw. Schwankung der Zustandsgröße angepasst wird. Gemäß diesem Aspekt wird in Bereichen des Prädiktionshorizonts, in denen eine große Schwankung oder Veränderung der Zustandsgröße erwartet wird, der Suchraum weniger stark eingeschränkt als in Bereichen, in denen kleinere Schwankungen oder Veränderungen erwartet werden. Dies beruht auf der Erkenntnis, dass die Genauigkeit der Prädiktion des zweiten Verlaufs in den Bereichen mit starker Schwankung weniger genau ist.

Der Suchraum ist vorzugsweise diskretisiert, d. h., es wird ein diskreter Wertebereich der Zustandsgröße im Prädiktionshorizont vorgeben. Ferner kann die Abtastfrequenz entlang der Horizontachse in diskreten Schritten erfolgen. Der diskrete Suchraum wird somit durch einzelne Zustandspunkte im Suchraum gebildet, die als mögliche Werte für die Zustandsgröße im Rahmen des Optimierungsverfahrens in Frage kommen. Bei einem diskreten Suchraum besteht im Rahmen der Erfindung ferner die Möglichkeit, dass ein vertikaler oder horizontaler Abstand der Suchraumpunkte wiederum in Abhängigkeit von einer Größe verändert wird, die ein Maß für die Stärke einer Änderung des prädizierten zweiten Verlaufs der Zustandsgröße angibt. Hierzu kann beispielsweise wiederum die erste und/oder die zweite Ableitung der Funktion, die den Verlauf der Zustandsgröße im Prädiktionshorizont angibt, verwendet werden. Eine Möglichkeit zur Suchraumeinschränkung besteht darin, dass der Abstand der Suchraumpunkte in den Bereichen vergrößert wird, in denen sich der prädizierte zweite Verlauf der Zustandsgröße weniger stark als ein vorgegebener Schwellenwert ändert. Dadurch wird die Abtastauflösung für das nachfolgende Optimierungsverfahren in diesen Bereichen erniedrigt, wodurch sich der Rechenaufwand erhöht.

Gemäß diesen Ausführungsvarianten erfolgt die Suchraumeinschränkung nicht durch eine Verkleinerung der Suchraumgrenzen, sondern durch eine Reduzierung der Zahl der Suchraumpunkte in den Bereichen, wo der prädizierte zweite Verlauf der Zustandsgröße sich nicht stark ändert.

Es wird betont, dass das vorgenannte Verfahren die Einschränkung eines Suchraums für ein modellbasiertes Online-Optimierungsverfahren betrifft, nicht jedoch das Optimierungsverfahren selbst, d. h., der erfindungsgemäß eingeschränkte Suchraum kann dann einem gattungsgemäßen modellbasierten Online-Optimierungsverfahren, z. B. einem bekannten modellbasierten prädiktiven Regelverfahren eines Kraftfahrzeugs, als Eingabedaten vorgeben werden. Die Erfindung kann zur Vorgabe eines eingeschränkten Suchraums für jegliche gattungsgemäße und an sich bekannte modellbasierte Online-Optimierungsverfahren verwendet werden, wobei die jeweiligen Prädiktionshorizonte und Zustandsgrößen natürlich die gleichen sein müssen.

Ein weiterer Gesichtspunkt der Erfindung betrifft ein modellbasiertes Online-Optimierungsverfahren, insbesondere ein modellbasiertes prädiktives Regelverfahren, bei dem der Suchraum gemäß einem Verfahren wie hierin beschrieben eingeschränkt wird.

Ein weiterer Aspekt der Erfindung betrifft ein Kraftfahrzeug, insbesondere ein Nutzfahrzeug, aufweisend einen modellbasierten Online-Optimierer, insbesondere einen modellbasierten prädiktiven Regler, der eingerichtet ist, den Suchraum zur Durchführung des modellbasierten Online-Optimierungsverfahrens wie hierin beschrieben einzuschränken.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Ermittlung eines optimalen Verlaufs einer Zustandsgröße innerhalb eines nicht-eingeschränkten Suchraums;
- Figur 2: ein schematisches Ablaufdiagramm zur Illustration eines Verfahrens zur Bestimmung eines eingeschränkten Suchraums gemäß einer Ausführungsform der Erfindung;
- Figur 3: Diagramme zur Illustration einer streckenbasierten Klassifizierung und Zustandsprädiktion gemäß einer Ausführungsform der Erfindung;
- Figur 4: eine Tabelle zur Illustration der streckenbasierten Klassifizierung und Zustandsprädiktion gemäß einer Ausführungsform der Erfindung am Beispiel des Ladezustands eines Energiespeichers als Zustandsgröße;
- Figur 5: einen ersten Verlauf einer Zustandsgröße, ermittelt mit dem Optimierungsverfahren, und einen zweiten Verlauf, abgeschätzt mit einer streckenbasierten Zustandsprädiktion gemäß einer Ausführungsform der Erfindung; und
- Figur 6: einen eingeschränkten Suchraum gemäß einer Ausführungsform der Erfindung.

Gleiche oder äquivalente Komponenten sind in allen Figuren mit den gleichen Bezugszeichen bezeichnet.

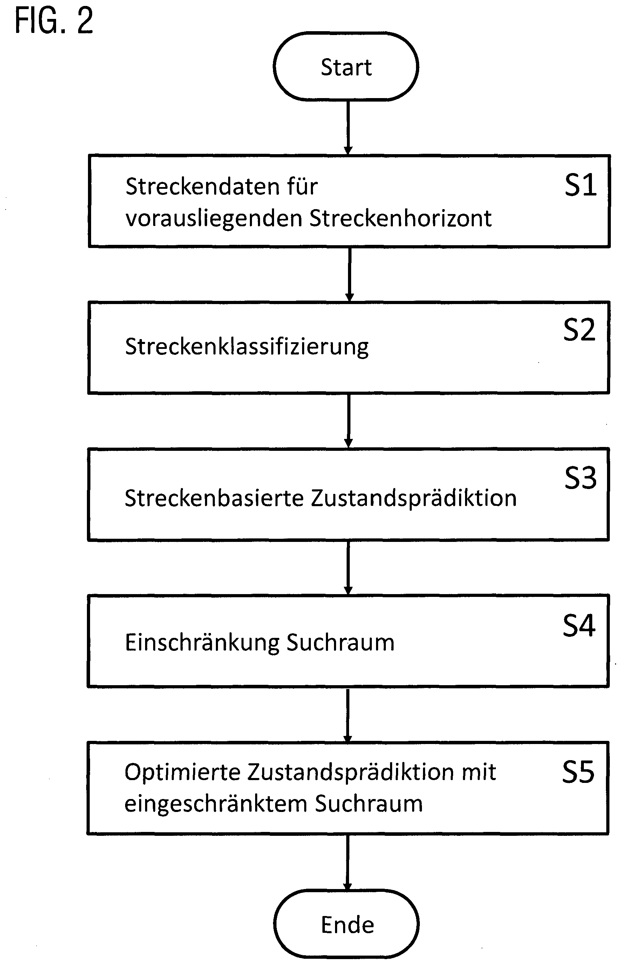

Figur 2 zeigt ein schematisches Ablaufdiagramm zur Illustration eines Verfahrens zur Bestimmung eines eingeschränkten Suchraums gemäß einer Ausführungsform der Erfindung.

Die Ausführungsform illustriert die Erfindung exemplarisch für den Ladezustand des Traktionsenergiespeichers als beispielhafte Zustandsgröße, deren Verlauf anhand von Streckendaten prädiziert (vorhergesagt) wird. Als Streckenddaten werden die Steigungsdaten bzw. das Höhenprofil der Strecke verwendet, da sich eine Änderung des Ladezustands für die Zwecke einer Vorhersage eines ungefähren Verlaufs des Ladezustands zur Suchraumeinschränkung hinreichend genau auf die Steigungsdaten bzw. das Höhenprofil zurückführen lässt.

Mit anderen Worten wird bei dem nachfolgenden Beispiel der Ladezustand eines elektrischen Energiespeichers in einem Hybrid-Fahrzeug rein auf Basis von Steigungsdaten einer vorausliegenden Strecke prädiziert. Simulative Untersuchungen haben gezeigt, dass der Ladezustand des Energiespeichers eine Ähnlichkeit zu dem Steigungsprofil der Strecke aufweist. Das Verfahren bildet demnach eine komplexe Betriebsstrategie für den Hybrid-Antriebsstrang hinreichend genau rein auf Basis von Steigungsdaten nach, indem es den Ladezustandsverlauf des Energiespeichers prädiziert.

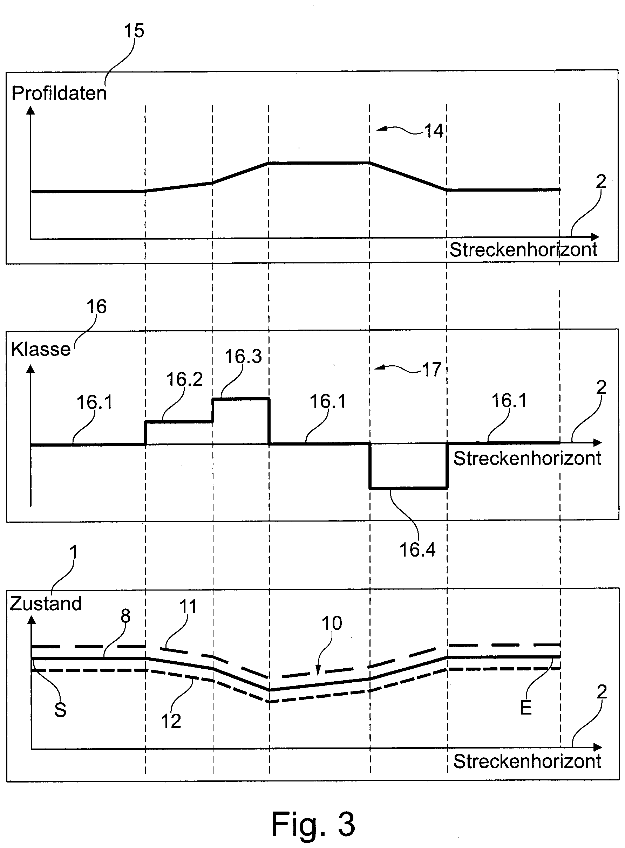

In Schritt S1 werden für den Streckenabschnitt, der dem aktuellen Strecken- bzw. Prädiktionshorizont 2 entspricht, die zugehörigen Streckenprofildaten 15 ermittelt, die insbesondere den Steigungsverlauf entlang der Strecke bzw. deren Höhenprofil angeben. Diese Daten können beispielsweise auf Basis der Kartendaten eines Navigationsgeräts bestimmt werden. Anhand der eingelesenen Streckendaten wird ein Streckenprofil 14 erstellt, wie es beispielsweise im oberen Diagramm der Figur 3 illustriert ist.

Wie vorstehend bereits erwähnt, kann sich das Streckenprofil aus verschiedenen Informationen zusammensetzen. So können die Streckenprofildaten 15 zur Steigerung der Vorhersagegenauigkeit des abgeschätzten Verlaufs der Zustandsgröße neben den Steigungsdaten auch Daten enthalten, die weitere Streckeneigenschaften betreffen, aus denen sich eine Ladezustandsänderung vorhersagen lässt. Ein Beispiel hierfür sind Geschwindigkeitsbegrenzungen auf der Strecke.

In Schritt S2 erfolgt anschließend eine Streckenklassifizierung anhand der Streckenprofildaten 15. Das Streckenprofil wird in Abhängigkeit von den ermittelten Streckenprofildaten 15 in verschiedene Phasen unterteilt, die jeweils einer Klasse 16 entsprechen, deren Abgrenzung durch feste Steigungsgrenzen vorgenommen wird. Vorliegend erfolgt die Unterteilung in Abhängigkeit von den Steigungsdaten, so dass sich eine Abfolge 17 von Klassen 16 entlang des Streckenabschnittes 2 ergibt und somit ein diskreter Klassenverlauf. Dies ist im mittleren Diagramm der Figur 3 dargestellt.

Für jede Klasse wird eine mittlere zu erwartende Speicherleistung definiert. Bei positiven Steigungen ist die Speicherleistung negativ, da dem Speicher in diesen Phasen Energie entnommen wird. Negative Steigungen definieren eine positive Speicherleistung. In diesen Phasen wird dem Speicher Energie zugeführt. Zudem gibt es in diesem Beispiel auch eine Phase, in der die Speicherleistung 0 kW entspricht, d. h., in dieser Phase erfährt der Ladezustand des Speichers keine Änderung.

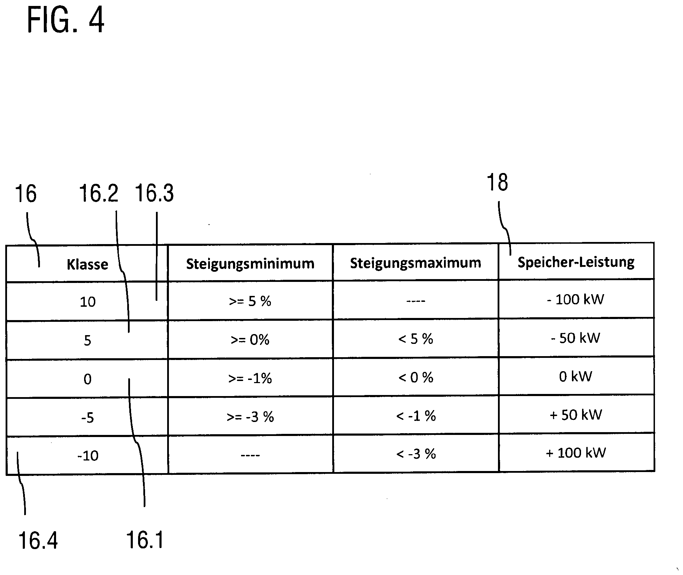

Die Einteilung der Klassen ist in Figur 4 beispielhaft erläutert. Wie in Figur 4 erkennbar, sind vorliegend fünf Klassen für die Streckenklassifizierung vorgeben. Eine erste Klasse ("10") 16.3, in die alle Streckenabschnitte eingeteilt werden, die eine Steigung größer gleich 5 % haben, was aus den Angaben der zweiten und dritten Spalte der Klassifizierungstabelle aus Figur 4 erkennbar ist. Eine zweite Klasse ("5") 16.2, in die alle Streckenabschnitte eingeteilt werden, die eine Steigung größer gleich 0 % und kleiner 5 % haben. Eine dritte Klasse ("0") 16.1, in die alle Streckenabschnitte eingeteilt werden, die eine Steigung größer gleich -1 % und kleiner 0 % haben. Eine vierte Klasse ("-5"), in die alle Streckenabschnitte eingeteilt werden, die eine Steigung größer gleich -3 % und kleiner -1 % haben, und eine fünfte Klasse ("-10") 16.4, in die alle Streckenabschnitte eingeteilt werden, die eine Steigung kleiner -3 % haben.

Jeder Klasse wird eine spezifische Funktion für die Zustandsprädiktion zugeordnet. Vorliegend ordnet diese Funktion für jede Klasse eine mittlere Änderung des Werts der Zustandsgröße zu, hier der Ladezustand, was in der Spalte 18 der Tabelle der Figur 4 dargestellt ist. Die Werte der Spalte 18 geben an, mit welcher Leistung pro Zeiteinheit der Speicher geladen bzw. entladen wird. So wird der Speicher beispielsweise bei Streckenabschnitten mit starken Steigungen von größer gleich 5 % pro Zeit- oder Streckeneinheit gemäß dem fahrzeugspezifischen Simulationsmodell durchschnittlich mit 100 kW entladen. Bei Streckenabschnitten mit geringen Steigungen größer gleich 0 % und kleiner 5 % wird der Speicher pro Zeit- oder Streckeneinheit mit 50 kW entladen. Dagegen wird der Speicher aufgrund von Rekuperationseffekten bei Gefällen von größer 3 % pro Zeit- oder Streckeneinheit mit 100 KW geladen. Aufgrund der Leistung und der zeitlichen Dauer der Phase ergibt sich eine Energiemenge, die dem Speicher zugeführt oder entzogen wird. Dies entspricht somit der Zustandsänderung des Ladezustandes.

Die Werte der Spalte 18 werden vorab heuristisch oder anhand von Simulationsergebnissen ermittelt. Vorliegend hängen diese Werte von der jeweiligen Antriebsstrangkonfiguration und der Betriebsstrategie des Traktionsenergiespeichers ab, die im Rahmen des Simulationsmodells abgebildet sind. Bei der simulativen Bestimmung der Funktionen werden die streckenabhängigen Zustandsverläufe ermittelt und anhand dieser Ergebnisse eine Klasseneinteilung definiert. Für jede Klasse wird eine auf den streckenspezifischen Parametern basierende Funktion abgeleitet, die den Verlauf des Systemzustands hinreichend genau abbildet. Mittels online im Fahrzeug parametrierbarer Funktionsparameter können zusätzlich Abweichungen zwischen realem Betrieb und der Simulationsergebnisse zur Laufzeit im Fahrzeug minimiert werden. Die Einteilung in verschiedene Klassen ermöglicht eine feine Abstufung der Zustandsprädiktion. Jede Klasse steht hierbei für einen Grad der Zustandsänderung. Je nach Grad ändert sich der Zustand in positiver oder negativer Richtung bzw. erfährt keine Änderung.

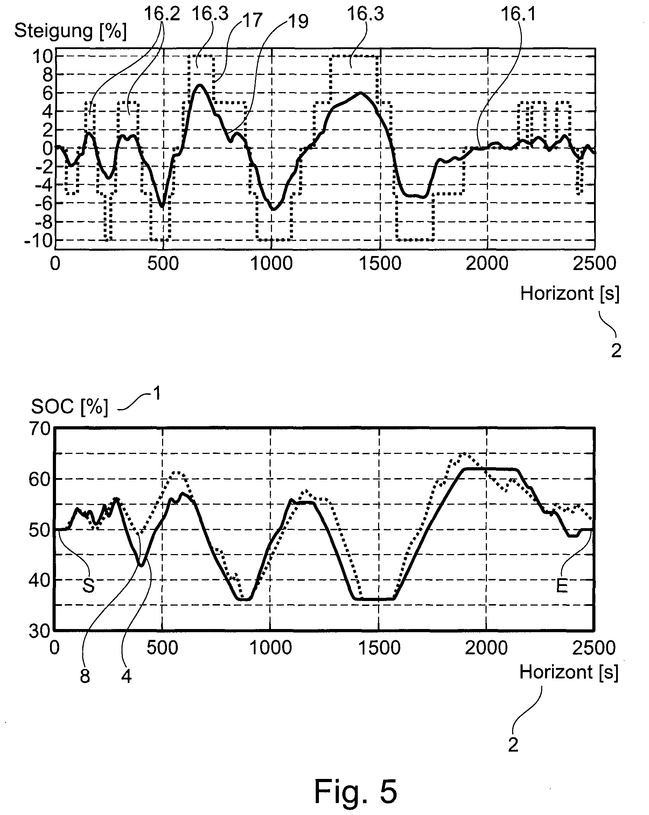

Im oberen Diagramm der Figur 5 ist nochmal beispielhaft ein weiteres Beispiel für eine Streckenklassifizierung gezeigt, die anhand der Klassifizierungstabelle der Figur 4 vorgenommen wurde. Die mit dem Bezugszeichen 19 bezeichnete Kurve stellt den Verlauf der Fahrbahnsteigung im Streckenhorizont 2 dar. Die mit dem Bezugszeichen 17 bezeichnete Treppenkurve stellt die Streckenklassifizierung gemäß der Klassifizierungstabelle dar. Aufgrund der Klassifizierung ergibt sich eine Abfolge von Klassen 16.

In Schritt S3 erfolgt dann eine streckenbasierte Prädiktion des Verlaufs des Ladezustands im Prädiktionshorizont.

Ausgehend von dem aktuellen Zustand zu Beginn des Streckenhorizontes, vorliegend somit dem aktuellen Ladezustand des Speichers zu Beginn des Streckenhorizontes, wird für jede Klasse auf Basis der hinterlegten Funktion oder Klassifizierungstabelle eine Zustandsprädiktion berechnet.

Jede der Klassen 16 ist für eine bestimmte zeitliche Dauer im Horizont aktiv. Dies ergibt sich aus dem Steigungsverlauf der Strecke und ist in Figur 5 anhand der unterschiedlichen Breiten der einzelnen Klassenabschnitte in Richtung der Achse des Streckenhorizonts 2 dargestellt. Durch Integration der mittleren Speicherleistungen über den gesamten Horizont ergibt sich der streckenbasierte Ladezustandsverlauf 8, der für das allgemeine Beispiel der Figur 3 im unteren Diagramm als Kurve 8 dargestellt ist und für das Beispiel des Ladezustandsverlauf im unteren Diagramm der Figur 5 ebenfalls durch die Kurve 8 dargestellt ist. Das Ergebnis der Berechnungen ist somit der prädizierte Zustandsverlauf 8, der rein auf Basis von Streckeninformationen und deren Auswirkungen auf den Ladezustand bestimmt wurde.

In Schritt S4 erfolgt anschließend eine Einschränkung des Suchraums für das nachfolgende Optimierungsverfahren, das gemäß dem Ausführungsbeispiel ein modellbasiertes prädiktives Regelverfahren ist.

Ausgehend von dem prädizierten Zustandsverlauf 8 wird mittels einer Hysterese, dargestellt durch die Kurven 11 und12 im unteren Diagramm der Figur 3, anschließend der reduzierte Suchraum 10 für das nachgelagerte Optimierungsverfahren definiert. Die Suchraumgrenzen 11, 12 können beispielsweise durch Verschieben des prädizierten zweiten Verlaufs 8 der Zustandsgröße um einen Offset in positiver und negativer Richtung festgelegt werden, so dass sich ein Suchraumband 10 ergibt, dessen Höhenprofil dem Verlauf 8 der prädizierten Zustandsgröße entspricht. Der Offset sollte so ausreichend groß gewählt werden, dass der optimale Verlauf der Zustandsgröße sich auch innerhalb der Offsetgrenzen befindet, so dass dieser vom nachfolgenden Optimierungsverfahren innerhalb des eingeschränkten Suchraums 10 ermittelt werden kann.

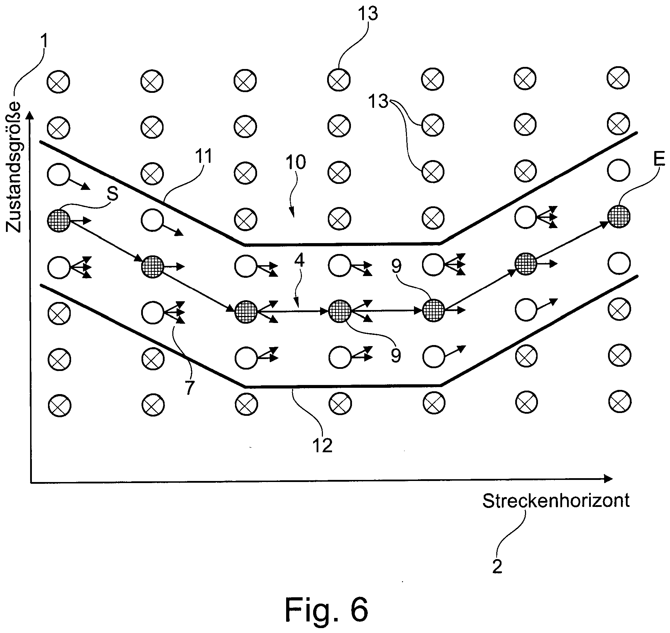

Dies ist nochmals schematisch in Figur 6 dargestellt. Es ist ersichtlich, dass der Suchraum 10 für das Optimierungsverfahren im Vergleich zum ursprünglichen Suchraum (siehe auch Figur 1) stark eingeschränkt werden kann. Alle Punkte 13 außerhalb der Grenzen 11, 12 des eingeschränkten Suchraums werden vom Optimierungsalgorithmus nicht mehr abgetastet, sondern nur noch diejenigen Punkte 7, die sich innerhalb der neuen Suchraumgrenzen 11, 12 befinden, so dass sich eine bedeutende Reduktion des Rechenaufwandes ergibt.

Innerhalb dieses reduzierten Suchraumes 10 berechnet das Optimierungsverfahren anhand detaillierter mathematischer Modelle den optimalen Zustandsverlauf innerhalb des Streckenhorizontes (Schritt S5). Das Optimierungsverfahren berechnet somit im Hinblick auf das vorgegebene Zielfunktional den optimalen Verlauf 4 der Zustandsgröße innerhalb des jeweils aktuellen Prädiktionshorizonts des gleitenden Prädiktionshorizontes. Der vorgegebene Startwert S des Ladezustandsverlaufs ist wiederum der aktuelle Ladezustand zu Beginn des Prädiktionshorizontes 2. Als Zielwert Z wird der mit dem streckenbasierten Prädiktionsverfahren ermittelte Endwert E dem Optimierungsverfahren vorgegeben.

Im unteren Diagramm der Figur 5 ist ein so bestimmter optimaler Verlauf 4 des Ladezustands dargestellt, der etwas von dem zuvor lediglich anhand von Streckeninformationen bestimmten Verlauf 8 abweicht.

Das Verfahren wird vorzugsweise mittels simulativer und heuristischer Untersuchungen so weit optimiert, bis eine hinreichende Genauigkeit in der Prädiktion des Ladezustandsverlaufes erreicht ist. Der Suchraum eines nachgelagerten Optimierungsverfahrens kann hiermit entscheidend eingeschränkt werden.

Das nachgelagerte modellbasierte Online-Optimierungsverfahren ist nicht Gegenstand der Erfindung und demzufolge hier nicht näher beschrieben. Das erfindungsgemäße Verfahren zur Einschränkung des Suchraums kann auch mit beliebigen derartigen Optimierungsverfahren eingesetzt werden, da lediglich die Vorgabe des Suchraums geändert wird.

Obwohl die Erfindung unter Bezugnahme auf bestimmte Ausführungsbeispiele beschrieben worden ist, ist es für einen Fachmann ersichtlich, dass verschiedene Änderungen ausgeführt werden können, ohne den Bereich der Erfindung zu verlassen. Die Erfindung ist nur im Rahmen der beigefügten Ansprüche beschränkt.

### Bezugszeichenliste

- 1: Zustandsgröße
- 2: Streckenhorizont, Prädiktionshorizont
- 3: Nicht eingeschränkter Suchraum
- 4: Optimaler Verlauf der Zustandsgröße im Suchraum
- 5a, 5b: Nicht optimale Verläufe der Zustandsgröße im Suchraum
- 6: Zustandspunkte im Suchraum
- 7: Zustandspunkte im eingeschränkten Suchraum
- 8: Prädizierter zweiter Verlauf der Zustandsgröße auf Basis von Streckeninformationen
- 9: Zustandspunkte entlang des optimalen ersten Verlaufs der Zustandsgröße
- 10: Eingeschränkter Suchraum
- 11: Obere Suchraumgrenze
- 12: Untere Suchraumgrenze
- 13: Zustandspunkte außerhalb des eingeschränkten Suchraums
- 14: Streckenprofil
- 15: Streckenprofildaten
- 16: Klasseneinteilung
- 16.1-16.4: Klassen
- 17: Abfolge von Klassen entlang des Streckenhorizonts
- 18: Mittlere Änderung der Speicherleistung nach Klasse
- 19: Steigungsverlauf des Streckenhorizonts
- S: Startpunkt der Zustandsgröße im Prädiktionshorizont
- E: Endpunkt der Zustandsgröße gemäß dem prädizierten zweiten Verlauf
- Z: Vorgegebener Zielwert der Zustandsgröße für das Optimierungsverfahren
- s1: Abstand der Zustandspunkte entlang des Prädiktionshorizonts im diskretisierten Suchraum
- s2: Vertikaler Abstand der Zustandspunkte im Suchraum

## Patentansprüche

1. Verfahren zur Einschränkung eines Suchraums (3) für ein modellbasiertes Online-Optimierungsverfahren, das einen prädizierten optimalen ersten Verlauf (4) einer Zustandsgröße (1) eines Fahrzeugs innerhalb eines vorgegebenen Suchraums für einen vorausliegenden Streckenabschnitt (2) bestimmt,
**gekennzeichnet durch**
a) Bestimmung eines prädizierten zweiten Verlaufs (8) der Zustandsgröße (1) entlang des vorausliegenden Streckenabschnitts (2) in Abhängigkeit von Streckeninformationen des vorausliegenden Streckenabschnitts (S1-S3),
b) Einschränken des Suchraums (3) in Abhängigkeit von dem bestimmten prädizierten zweiten Verlauf der Zustandsgröße (S4); und
c) Verwenden des so eingeschränkten Suchraums (3) für die nachfolgende Bestimmung des ersten Verlaufs (4) der Zustandsgröße (1).

2. Verfahren nach Anspruch 1, **dadurch gekennzeichnet, dass** die Bestimmung des prädizierten zweiten Verlaufs (8) die folgenden Schritte umfasst:
a) Ermittlung von Streckendaten (15) für den vorausliegenden Streckenabschnitt (S1),
b) Einteilung des vorausliegenden Streckenabschnitts in vorbestimmte Klassen (16) in Abhängigkeit von den ermittelten Streckendaten (15), so dass sich eine Abfolge (17) von Klassen (16) entlang des Streckenabschnittes (2) ergibt, wobei jeder Klasse (16) ein entsprechender Wert der Zustandsgröße oder eine entsprechende Änderung des Werts der Zustandsgröße zugeordnet ist (S2),
c) Bestimmung des prädizierten zweiten Verlaufs (8) der Zustandsgröße (1) anhand der zugeordneten Relativänderungen (18) und/oder Absolutwerte der Zustandsgröße für die Abfolge (17) von Klassen entlang des Streckenabschnittes (S3).

3. Verfahren nach einem der vorhergehenden Ansprüche, **dadurch gekennzeichnet,**
a) **dass** die Zustandsgröße (1)
a1) einen Ladezustand eines Energiespeichers zur Bereitstellung elektrischer Antriebsenergie in einem Hybrid- oder Elektroantriebsstrang,
a2) eine Kühlmitteltemperatur eines Primär- oder Sekundärkühlkreislaufs eines Antriebsstrangs,
a3) eine Gangwahl für ein automatisiertes Getriebe und/oder
a4) eine Geschwindigkeitswahl des Fahrzeugs
angibt; und/oder
b) **dass** die Einteilung des vorausliegenden Streckenhorizontes in vorbestimmte Klassen zumindest in Abhängigkeit von einem Steigungsverlauf und/oder einem Höhenprofil der Fahrtstrecke erfolgt.

4. Verfahren nach einem der vorhergehenden Ansprüche, **dadurch gekennzeichnet, dass** ein prädizierter Zielzustand (E) des zweiten Verlaufs (8) als Zielzustand (Z) für das nachfolgende Optimierungsverfahren vorgegeben wird.

5. Verfahren nach einem der vorhergehenden Ansprüche, **dadurch gekennzeichnet, dass** die jeder Klasse (16) zugeordnete Relativänderung (18) und/oder der jeder Klasse zugeordnete Absolutwert der Zustandsgröße offline mittels einer Simulation oder eines heuristischen Verfahrens ermittelt wird.

6. Verfahren nach einem der vorhergehenden Ansprüche, **dadurch gekennzeichnet,** a) dass durch Verschieben des prädizierten zweiten Verlaufs (8) der Zustandsgröße um einen positiven ersten Offset eine erste Suchraumgrenze (11) festgelegt wird; und
b) dass durch Verschieben des prädizierten zweiten Verlaufs (8) der Zustandsgröße um einen negativen zweiten Offset eine zweite Suchraumgrenze (12) festgelegt wird, wobei der eingeschränkte Suchraum (10) für die Zustandsgröße alle Werte der Zustandsgröße im Prädiktionshorizont umfasst, die innerhalb der ersten und zweiten Suchraumgrenzen (11, 12) liegen.

7. Verfahren nach Anspruch 6, **dadurch gekennzeichnet, dass** ein Abstand der Suchraumgrenzen (11, 12) vom prädizierten zweiten Verlauf (8) der Zustandsgröße in Abhängigkeit von einer Stärke einer Änderung des prädizierten zweiten Verlaufs der Zustandsgröße festgelegt ist.

8. Verfahren nach einem der vorhergehenden Ansprüche, **dadurch gekennzeichnet, dass** ein Abstand von Zustandspunkten im Suchraum in Abhängigkeit von einer Änderung des prädizierten zweiten Verlaufs (8) der Zustandsgröße festgelegt wird, derart, dass in Abschnitten des Prädiktionshorizonts, in denen die Änderung des prädizierten zweiten Verlaufs einen vorgegebenen Schwellenwert unterschreitet, ein horizontaler und/oder vertikaler Abstand der Zustandspunkts erhöht wird.

9. Modellbasiertes Online-Optimierungsverfahren, insbesondere modell-basiertes prädiktives Regelverfahren, bei dem der Suchraum gemäß einem Verfahren der vorhergehenden Ansprüche 1 bis 8 eingeschränkt wird.

10. Kraftfahrzeug, insbesondere Nutzfahrzeug, aufweisend einen modellbasierten Online-Optimierer, der eingerichtet ist, den Suchraum zur Durchführung eines modellbasierten Online-Optimierungsverfahrens gemäß einem Verfahren der vorhergehenden Ansprüche 1 bis 8 einzuschränken.

## Claims

1. A method for restricting a search area (3) for a model-based online optimization method that determines a predicted optimum first trend (4) in a state variable (1) of a vehicle within a prescribed search area for a route section (2) ahead,
**characterized by**
a) determination of a predicted second trend (8) in the state variable (1) along the route section (2) ahead on the basis of route information for the route section (S1-S3) ahead,
b) restriction of the search area (3) on the basis of the determined predicted second trend in the state variable (S4); and
c) use of the search area (3) restricted in this way for the subsequent determination of the first trend (4) in the state variable (1).

2. The method according to Claim 1, **characterized in that** the determination of the predicted second trend (8) comprises the following steps:
a) ascertainment of route data (15) for the route section (S1) ahead,
b) categorization of the route section ahead into predetermined classes (16) on the basis of the ascertained route data (15), so that a succession (17) of classes (16) along the route section (2) is obtained, each class (16) having an associated corresponding value of the state variable or an associated corresponding change in the value of the state variable (S2),
c) determination of the predicted second trend (8) in the state variable (1) on the basis of the associated relative changes (18) and/or absolute values of the state variable for the succession (17) of classes along the route section (S3).

3. The method according to either of the preceding claims, **characterized**
a) **in that** the state variable (1) indicates
a1) a state of charge of an energy store for providing electrical drive energy in a hybrid or electric drivetrain,
a2) a coolant temperature of a primary or secondary cooling circuit of a drivetrain,
a3) a gear selection for an automated gearbox and/or
a4) a speed selection of the vehicle; and/or
b) **in that** the categorization of the route horizon ahead into predetermined classes is performed at least on the basis of a gradient profile and/or an altitude profile of the journey route.

4. The method according to one of the preceding claims, **characterized in that** a predicted target state (E) of the second trend (8) is prescribed as target state (Z) for the subsequent optimization method.

5. The method according to one of the preceding claims, **characterized in that** the relative change (18) associated with each class (16) and/or the absolute value of the state variable associated with each class is ascertained offline by means of a simulation or a heuristic method.

6. The method according to one of the preceding claims, **characterized**
a) **in that** a first search area boundary (11) is defined by shifting the predicted second trend (8) in the state variable by a positive first offset; and
b) **in that** a second search area boundary (12) is defined by shifting the predicted second trend (8) in the state variable by a negative second offset,
wherein the restricted search area (10) comprises, for the state variable, all values of the state variable in the prediction horizon that are within the first and second search area boundaries (11, 12).

7. The method according to Claim 6, **characterized in that** a distance of the search area boundaries (11, 12) from the predicted second trend (8) in the state variable is defined on the basis of a strength of a change in the predicted second trend in the state variable.

8. The method according to one of the preceding claims, **characterized in that** a distance of state points in the search area is defined on the basis of a change in the predicted second trend (8) in the state variable such that a horizontal and/or vertical distance of the state points is increased in sections of the prediction horizon in which the change in the predicted second trend is below a prescribed threshold value.

9. A model-based online optimization method, in particular a model-based predictive control method, in which the search area is restricted using a method of the preceding Claims 1 to 8.

10. A motor vehicle, in particular a commercial vehicle, having a model-based online optimizer that is configured to restrict the search area for performing a model-based online optimization method using a method of the preceding Claims 1 to 8.

## Revendications

1. Procédé de restriction d'un espace de recherche (3) destiné à un procédé d'optimisation en ligne à base de modèles, qui détermine un premier profil optimal prédit (4) d'une grandeur d'état (1) d'un véhicule dans un espace de recherche spécifié pour une portion d'itinéraire (2) située devant,
**caractérisé par** les étapes suivantes :
a) déterminer un deuxième profil prédit (8) de la grandeur d'état (1) le long de la portion d'itinéraire (2) située devant en fonction d'informations d'itinéraire de la portion d'itinéraire (S1-S3) située devant,
b) restreindre l'espace de recherche (3) en fonction du deuxième profil prédit de la grandeur d'état (S4) ;
et
c) utiliser l'espace de recherche (3) ainsi restreint pour déterminer ultérieurement le premier profil (4) de la grandeur d'état (1).

2. Procédé selon la revendication 1, **caractérisé en ce que** la détermination du deuxième profil prédit (8) comprend les étapes suivantes :
a) déterminer des données d'itinéraire (15) pour la portion d'itinéraire (S1) située devant,
b) diviser la portion d'itinéraire située devant en classes prédéterminées (16) en fonction des données d'itinéraire déterminées (15) de sorte qu'il en résulte une succession (17) de classes (16) le long de la portion d'itinéraire (2), chaque classe (16) étant associée à une valeur correspondante de la grandeur d'état ou une variation correspondante de la valeur de la grandeur d'état (S2),
c) déterminer le deuxième profil prédit (8) de la grandeur d'état (1) sur la base des variations relatives (18) et/ou valeurs absolues associées de la grandeur d'état pour la succession (17) de classes le long de la portion d'itinéraire (S3).

3. Procédé selon l'une des revendications précédentes, **caractérisé en ce que**
a) la grandeur d'état (1) indique
a1) un état de charge d'un accumulateur d'énergie destiné à fournir de l'énergie d'entraînement électrique dans une chaîne cinématique hybride ou électrique,
a2) une température d'agent de refroidissement d'un circuit de refroidissement primaire ou secondaire d'une chaîne cinématique,
a3) une sélection de rapport pour une transmission automatisée et/ou
a4) une sélection de vitesse du véhicule ; et/ou
b) la division de l'horizon d'itinéraire situé devant en classes prédéterminées est effectuée au moins en fonction d'un profil de pente et/ou d'un profil de hauteur de la portion d'itinéraire.

4. Procédé selon l'une des revendications précédentes, **caractérisé en ce qu'**un état cible prédit (E) du deuxième profil (8) spécifié comme état cible (Z) pour le procédé d'optimisation suivant.

5. Procédé selon l'une des revendications précédentes, **caractérisé en ce que** la variation relative (18) associée à chaque classe (16), et/ou la valeur absolue associée à chaque classe, de la grandeur d'état est déterminée hors ligne au moyen d'une simulation ou d'un procédé heuristique.

6. Procédé selon l'une des revendications précédentes, **caractérisé en ce que**
a) une première limite d'espace de recherche (11) est définie par décalage du deuxième profil prédit (8) de la grandeur d'état d'une première valeur de décalage positive ; et
b) une deuxième limite d'espace de recherche (12) est définie par décalage du deuxième profil prédit (8) de la grandeur d'état d'une deuxième valeur de décalage négative,
l'espace de recherche restreint (10) pour la grandeur d'état comprenant toutes les valeurs de la grandeur d'état dans l'horizon de prédiction qui se trouvent dans les première et deuxième limites d'espace de recherche (11, 12).

7. Procédé selon la revendication 6, **caractérisé en ce qu'**une distance entre les limites d'espace de recherche (11, 12) et le deuxième profil prédit (8) de la grandeur d'état est définie en fonction d'une force d'une variation du deuxième profil prédit de la grandeur d'état.

8. Procédé selon l'une des revendications précédentes, **caractérisé en ce qu'**une distance entre des points d'état dans l'espace de recherche est définie en fonction d'une variation du deuxième profil prédit (8) de la grandeur d'état de manière à augmenter une distance horizontale et/ou verticale des points d'état dans des portions de l'horizon de prédiction dans lesquelles la variation du deuxième profil prédit tombe au-dessous d'une valeur seuil spécifiée.

9. Procédé d'optimisation en ligne à base de modèles, notamment procédé de régulation prédictif à base de modèles, dans lequel l'espace de recherche est restreint conformément à un procédé selon les revendications précédentes 1 à 8.

10. Véhicule automobile, en particulier véhicule utilitaire, comportant un optimiseur en ligne à base de modèles, qui est conçu pour restreindre l'espace de recherche pour effectuer un procédé d'optimisation en ligne à base de modèles conformément à un procédé selon les revendications précédents 1 à 8.
